Europäisches Patentamt

European Patent Office

Office européen des brevets

(11) Veröffentlichungsnummer: **0 149 080**
**B1**

(12) **EUROPÄISCHE PATENTSCHRIFT**

(45) Veröffentlichungstag der Patentschrift: **29.08.90**

(51) Int. Cl.⁵: **F 16 F 13/00, B 60 K 5/12**

(21) Anmeldenummer: **84114509.7**

(22) Anmeldetag: **29.11.84**

(54) **Hydraulischer Schwingungsdämpfer für elastische Stützlager in Kraftfahrzeugen.**

(30) Priorität: **28.12.83 DE 3347274**

(43) Veröffentlichungstag der Anmeldung:
**24.07.85 Patentblatt 85/30**

(45) Bekanntmachung des Hinweises auf die
Patenterteilung:
**29.08.90 Patentblatt 90/35**

(84) Benannte Vertragsstaaten:
**FR GB IT SE**

(56) Entgegenhaltungen:
| | |
|---|---|
| EP-A-0 027 751 | DE-A-3 140 783 |
| EP-A-0 038 062 | DE-C-3 225 700 |
| EP-A-0 044 545 | FR-A-1 288 674 |
| EP-A-0 133 588 | FR-A-2 548 314 |
| EP-A-0 142 943 | GB-A- 410 519 |

**PATENT ABSTRACTS OF JAPAN, Band 8, Nr.
177 (M-317) 1614r, 15. August 1984; & JP-A-59
69 543 (NISSAN JIDOSHA K.K.) 19-04-1984**

(73) Patentinhaber: **Lemförder Metallwaren AG
Postfach 1220
D-2844 Lemförde (DE)**

(72) Erfinder: **Jördens, Ernst-Günter
Geranienweg 29
D-2845 Damme (DE)**

Courier Press, Leamington Spa, England.

Beschreibung

Die Erfindung betrifft einen hydraulischen Schwingungsdämpfer für elastische Stützlager in Kraftfahrzeugen mit Gattungsmerkmalen nach dem Patentanspruch 1.

Ein solches Stützlager ist aus der DE-PS 32 25 700 bekannt. Es wird zur Dämpfung und Tilgung von Schwingungen eingebaut, die mit sehr unterschiedlichen Frequenzen und Amplituden durch den Fahrbetrieb und Umwuchten des Motors oder anderer sich bewegender Teile erregt werden. Es wird somit angestrebt, die Dämpfungswirkung über einen möglichst großen Frequenz- und Amplitudenbereich meistens in Verbindung mit einem elastischen Federelement wirksam zu gestalten.

Bei dem bekannten Stützlager sind ein Federelement mit einem Federkörper aus einem elastischen Werkstoff und ein hydraulischer Dämpfer aus einer Arbeitskammer und einer Ausgleichskammer integriert, die beide eine gemeinsame Trennwand mit einer darin spiralförmig ausgebildeten Drosselöffnung aufweisen, so daß bei Einfederungen des Federelements Flüssigkeit aus dem Arbeitsraum über die Drosselöffnung in den Ausgleichsraum verdrängt wird und auf umgekehrtem Wege zurückfließt, wenn das Federelement wieder ausfedert. Die Belastungen des Federelements werden somit voll auf den hydraulischen Dämpfer wirksam. Im Hinblick auf die Wirkungsweise des Dämpfers in einem großen Frequenz- und Amplitudenbereich ist die Trennwand der bekannten Ausführung teilweise aus einem elastischen Werkstoff hergestellt, wobei dieser Teil zwischen steifen Gittern angeordnet sowie mit durchtrennenden Schnitten versehen ist, die voneinander unabhängig bewegliche Teilbereiche der membranartigen Trennwand bilden. Die Drosselbohrung kann dabei auf kleine Amplituden ausgelegt werden, so daß bei steigendem Druck und größeren Schwingungsamplituden der Drosselquerschnitt durch die Schnitte in dem membranartigen Teil der Trennwand eine stetige Erweiterung in Abhängigkeit von der zur Verfügung stehenden Druckdifferenz zwischen Ausgleichs- und Arbeitsraum erfährt.

Aufgabe der Erfindung ist eine Verbesserung der Drosselwirkung in der Trennwand zwischen dem Arbeitsraum und dem Ausgleichsraum durch eine andere Ausbildung der Sperrglieder in den Drosselöffnungen zur besseren Anpassung an wechselnde Frequenzen und Amplituden der durch die Belastung erregten Schwingungen und insbesondere für den Bereich kleiner Amplituden eine feinere Abstimmung der Konstruktion zu erreichen.

Die Erfindung löst diese Aufgabe vor allem durch Ausbildungsmerkmale nach dem Kennzeichen des Patentanspruches.

Die erfindungsgemäße Ausbildung hat den Vorteil, daß die im normalen und somit überwiegenden Betriebszustand wirksamen Ventilöffnungen mit ihren Verschlußkörpern bei plötzlich auftretenden größeren Belastungen mit größerer Amplitude außer Betrieb gesetzt werden und daß die für diese Belastungen allein wirksamen Drosselkanäle eine bessere Wirkung als bisher zeigen, weil die Strömung der Flüssigkeit in Kanälen innerhalb der Trennwand mehrfach umgelenkt wird und unterschiedliche Strömungsquerschnitte passieren muß, wodurch Schwingungsenergie vernichtet wird. Ringsegmentförmige (nierenförmige) Ein- und Austritte der Drosselöffnungen erhöhen diese Wirkung.

Die erfindungsgemäß in den Ventilöffnungen vorgesehenen Schwimmerkugeln ermöglichen eine weitestgehend reibungsarme Flüssigkeitsbewegung zwischen dem Arbeitsraum und dem Ausgleichsraum. Bei größer werdenden Schwingungsamplituden versperren die Schwimmerkugeln die Ventilöffnungen.

Zur Anwendung dieser Merkmale wird angestrebt, den Dämpfer in Verbindung mit einem die statische Belastung eines Systems aufnehmenden Federelement mit einem Federkörper aus elastischem Werkstoff einzubauen, wobei der Dämpfer und das Federelement funktionell integriert sein können, vorteilhaft aber unabhängig voneinander arbeiten.

Nachfolgend wird die Erfindung anhand von auf der Zeichnung dargestellten Ausführungsbeispielen näher erläutert. Auf der Zeichnung zeigen:

Figur 1 einen vertikalen Schnitt durch ein elastisches Lager aus einem Federelement und einem hydraulischen Dämpfer,

Figur 2 einen vertikalen Schnitt durch ein anderes Ausführungsbeispiel eines hydraulischen Dämpfers und

Figur 3 ein weiteres Ausführungsbeispiel der Trennwand im vertikalen Schnitt.

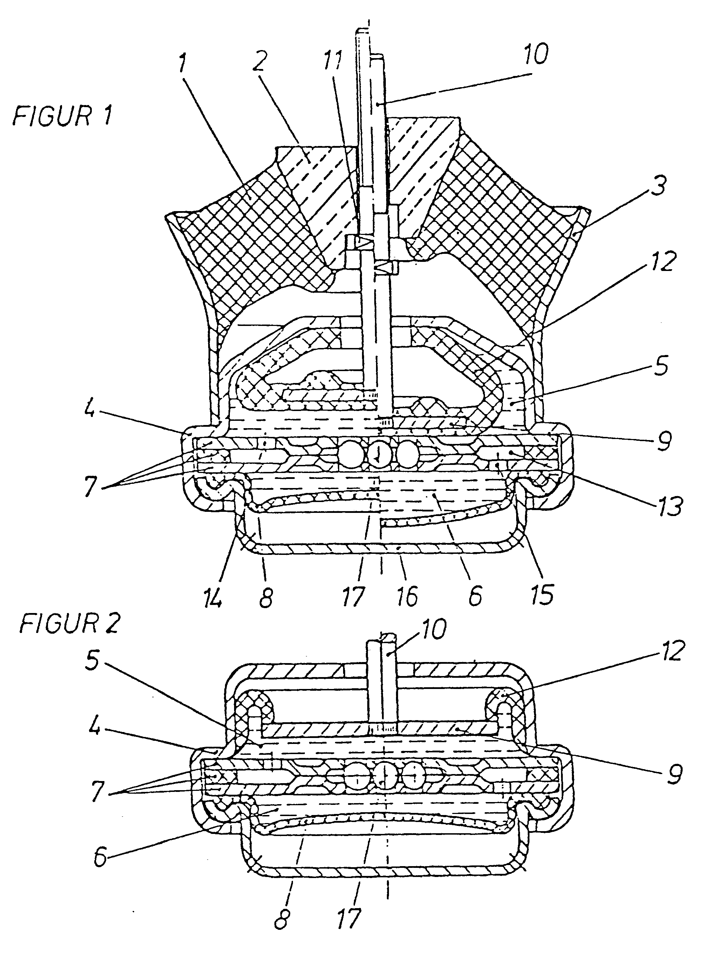

Die Figur 1 zeigt die Kombination eines Federelements und eines hydraulischen Dämpfers. Das Federelement weist einen Federkörper 1 aus elastischem Werkstoff auf, der zwischen einem Innenteil 2 und einem äußeren Käfig 3 eingespannt und mit diesen festhaftend verbunden ist. Ein solches Federelement ist oben auf das Gehäuse 4 eines hydraulischen Dämpfers aufgesetzt. In dem Gehäuse 4 des hydraulischen Dämpfers ist ein oberer Arbeitsraum 5 von einem unteren Ausgleichsraum 6 durch eine Trennwand 7 abgeteilt. Die Wandung des Ausgleichsraumes 6 besteht ganz oder teilweise aus einem elastischen Balg 8 oder dergleichen. Innerhalb des Arbeitsraumes 5 ist ein Kolben 9 angeordnet, der mit einer Kolbenstange 10 verbunden ist, die oben aus dem Gehäuse 4 herausgeführt ist, das Innenteil 2 axial beweglich durchgreift und zusammen mit diesem nach der Einfederung des Federelements an dem abzustützenden Bauteil befestigbar ist. Eine bundförmige Verdrehsicherung 11 auf der Kolbenstange 10 begrenzt die axiale Beweglichkeit des Innenteiles 2 auf der Kolbenstange 10, so daß letztere durch das Innenteil 2 mitgenommen wird, um den Kolben 9 innerhalb des Arbeitsraumes 5 abwärts zu bewegen. Die Abdichtung des Kolbens 9 erfolgt durch einen Balg 12, der zwischen dem Kolben 9 und dem Gehäuse 4 angeordnet ist und der eine erheblich geringere Steifigkeit in Quer- und Längsrichtung aufweisen sollte als das Federelement, wenn der Dämpfer mit einem Federelement kombiniert zur Anwendung kommt. Durch Abwärtsbewegung des Kolbens 9 wird Flüssigkeit aus dem Arbeitsraum 5 in den Ausgleichsraum 6 verdrängt. Dabei muß sie die Drosselöffnungen in der Trennwand 7 passieren. Letztere weist einen sich in ihrer Ebene etwa horizontal erstreckenden Überströmkanal 13 auf, der einerseits über eine Verbindungsöffnung 14 mit dem Arbeitsraum 5 und andererseits durch eine Verbindungsöffnung 15 mit dem Ausgleichsraum 6 verbunden ist, so daß die Flüssigkeit aus dem Arbeitsraum 5 über die Verbindungsöffnung 14 in den Kanal 13 und über die Verbindungsöffnung 15 in den Ausgleichsraum 6 gelangt. Die Verbindungsöffnungen 14 und 15 weisen in der Draufsicht vorteilhaft ein nierenförmiges Profil auf. Außerdem sind in der Trennwand 7 Ventilöffnungen 16 vorgesehen, in denen Verschlußkörper angeordnet sind, die nach der Erfindung und dem Ausführungsbeispiel aus Schwimmerkugeln 17 bestehen. Die in der Flüssigkeit schwebenden Schwimmerkugeln 17 ermöglichen eine weitgehend reibungsarme Flüssigkeitsbewegung zwischen dem Arbeitsraum 5 und dem Ausgleichsraum 6. Bei größeren Amplituden versperren sie durch den steigenden Druck im Arbeitsraum 5 die Ventilöffnungen 16, so daß Flüssigkeit nur noch über die Verbindungsöffnungen 15 und den Kanal 13 vom Arbeitsraum 5 in den Ausgleichsraum 6 gelangen kann. Zur Vereinfachung der Herstellung ist in dem Beispiel der Figuren 1 und 2 eine dreischichtige Trennwand mit entsprechender Profilierung dargestellt, so daß durch die Profilierung der Kanal 13 und Sitzflächen für die Schwimmerkugeln 17 gebildet werden.

Die Figur 2 zeigt in einem abgeänderten Ausführungsbeispiel, daß für die Gestaltung des Kolbens 9 in dem Arbeitsraum 5 unterschiedliche Ausbildungen ebenso möglich sind wie für die Gestaltung des Balges 12 zur Abdichtung des Kolbens gegenüber dem Gehäuse 4.

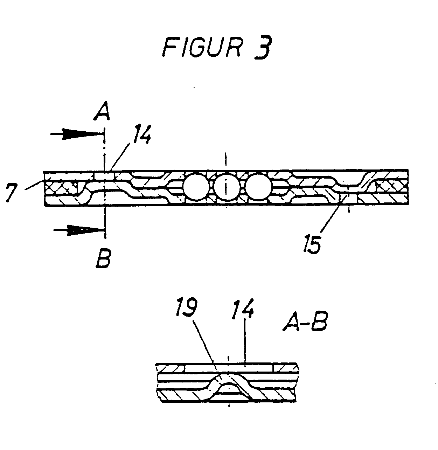

Die Figur 3 zeigt die unterschiedliche Gestaltungsmöglichkeit der Verbindungsöffnungen 14 und 15, welche in der Draufsicht ein ringsegmentförmiges oder nierenförmiges Profil aufweisen können, wobei die Strömungsrichtung ändernde Konturen 19 vorgesehen sind. Die in der genannten Weise gestalteten Verbindungsöffnungen sind vorteilhaft zueinander winkelversetzt angeordnet, so daß für den Kanal 13 Längen zwischen nahezu Null Grad und 360 Grad erzielbar sind.

## Patentanspruch

Hydraulischer Schwingungsdämpfer für elastische Stützlager in Kraftfahrzeugen, bei dem ein mit Flüssigkeit gefüllter Innenraum durch eine Trennwand aus zwei um ihre Hochachse gegeneinander einstellbaren Scheiben in einen Arbeitsraum und einen Ausgleichsraum unterteilt und beide Teilräume volumenveränderlich sind und bei dem die Trennwand Ventilöffnungen mit Verschlußkörpern und außerdem einen Überströmkanal aufweist, der mit dem Arbeitsraum durch eine Verbindungsöffnung in der einen Scheibe und mit dem Ausgleichsraum durch eine Verbindungsöffnung in der anderen Scheibe verbunden ist, wobei die Mündungen der Verbindungsöffnungen winkelversetzt zueinander angeordnet sind, dadurch gekennzeichnet, daß ein kreisringförmiger Überströmkanal (13) etwa horizontal in der Ebene der Trennwand (7) verläuft, daß die Verbindungsöffnungen (14, 15) des Überströmkanals (13) einen ringsegmentförmigen (nierenförmigen) Querschnitt aufweisen, so daß die Strömung unterschiedliche Strömungsquerschnitte passieren muß, und derart angeordnet sind, daß die Flüssigkeit mehrfach umgelenkt wird, und daß die Verschlußkörper der Ventilöffnungen (16) aus Schwimmerkugeln (17) bestehen, die bei stärkeren Ein- oder Ausfederungen die Ventilöffnungen (16) selbsttätig schließen.

## Revendication

Amortisseur d'oscillations hydraulique pour supports élastiques destiné à des véhicules automobiles, dans lequel un volume intérieur, empli de liquide, est divisé par une cloison, constituée de deux disques réglables l'un par rapport à l'autre, autour de leur axe vertical, en un compartiment de travail et un compartiment de compensation, et dans lequel les deux compartiments sont de volume variable et la cloison présente des ouvertures de vanne avec des organes d'obturation ainsi qu'un canal de trop-plein qui est relié au compartiment de travail, par une ouverture de communication pratiquée dans l'un des disques, et est relié au compartiment de compensation par une ouverture de communication pratiquée dans l'autre disque, les embouchures des ouvertures de communication étant décalées angulairement l'une par rapport à l'autre, caractérisé en ce qu'un canal de trop-plein (13) en forme d'anneau circulaire s'étend à peu près horizontalement dans le plan de la cloison (7), en ce que les ouvertures de communication (14, 15) du canal de trop-plein (13) présentent une section transversale en forme de segment d'anneau (en haricot), de sorte que le flux doit passer à travers différentes sections transversales d'écoulement, et sont disposées de manière que le liquide soit dévié plusieurs fois, et en ce que les organes d'obturation des ouvertures de vanne (16) sont constitués de flotteurs sphériques (17) qui ferment automatiquement les ouvertures de vanne (16), en cas de mouvements de ressort importants dans un sens ou dans l'autre.

## Claim

Hydraulic vibration damper for elastic support bearings in motor vehicles, in which an inner chamber filled with liquid is divided, by a partition consisting of two discs adjustable in relation to one another about their vertical axis, into a work chamber and an equalising chamber, in which the volumes of the two part chambers are variable, and in which the partition has valve ports with closure bodies and, in addition, an overflow duct connected with the work chamber by a connection opening in one of the discs and with the equalising chamber by a connection opening in the other disc, whereby the outlets of the connecting openings are arranged in angularly offset manner in relation to one another, characterised in that an annular overflow duct (13) extends approximately horizontally within the plane of partition (7), the connecting openings (14, 15) of overflow duct (13) have a cross-section in the shape of a ring-segment (in the shape of a kidney) so that the flow is compelled to pass different flow cross-sections and are so arranged that the liquid is repeatedly deflected, and in that the closure bodies of valve port (16) consist in float balls (17) which in case of major inward or outward spring movements automatically close the valve ports (16).

FIGUR 1

FIGUR 2

## FIGUR 3